# FASCICULE DE BREVET EUROPEEN

(11) **EP 2 409 751 B1**
(45) Date de publication et mention de la délivrance du brevet: **20.08.2014**
(21) Numéro de dépôt: 11174454.6
(22) Date de dépôt: 19.07.2011
(51) Int. Cl.: B01D 46/10, B01D 46/52, B01D 46/00, B60H 3/06

(54) **Dispositif de filtration d'air et installation de circulation d'air, notamment pour un véhicule automobile, comprenant un tel dispositif.**
Luftfiltervorrichtung und Luftzirkulationsanlage, insbesondere für ein Kraftfahrzeug, einschließlich einer solchen Vorrichtung
Air filtering device and air circulation installation, primarily for a motor vehicle including such a device.

(30) Priorité: 23.07.2010 FR 1003103
(43) Date de publication de la demande: 25.01.2012
(73) Titulaire: Valeo Matériaux de Friction, 87020 Limoges (FR)
(72) Inventeur: Bidot, Johann, 14260 CAMPADRE VALCONGRAIN (FR)
(74) Mandataire: Vieillevigne, Sébastien Nicolas Bernard

(56) Documents cités:
- EP-A1- 2 108 432
- WO-A1-2009/010528
- DE-B3-102004 047 888
- DE-U1-202005 011 078
- FR-A1- 2 197 625
- FR-A1- 2 855 072
- FR-A1- 2 921 845
- US-A1- 2010 000 190

## Description

L'invention est du domaine des installations de circulation d'air, en particulier, les installations de chauffage, ventilation et/ou climatisation, destinées à équiper un véhicule automobile. L'invention concerne plus particulièrement les dispositifs de filtration d'air agencés dans de telles installations.

Les installations de circulation d'air, notamment destinées à équiper un véhicule automobile, comprennent au moins un dispositif de filtration d'air apte à assurer un traitement qualitatif d'un flux d'air destiné à être distribué dans un habitacle du véhicule automobile.

De façon traditionnelle, dans un véhicule automobile, le dispositif de filtration d'air est constitué par des filtres à particules, notamment en fibres non tissées, destinés à retenir les particules solides afin d'empêcher leur introduction dans l'habitacle par le flux d'air traité. De même, les installations de circulation d'air peuvent aussi être équipées de filtres à charbon actif destinés à retenir les odeurs et polluants gazeux. Enfin, il est également connu de disposer de filtres combinés incluant les fonctions propres aux filtres à particules et aux filtres à charbon actif.

De tels dispositifs de filtration d'air comportent un cadre globalement de section polygonale et un média filtrant. De façon avantageuse, le média filtrant est plissé et est maintenu dans le cadre.

Le document FR 2 855 072 décrit un tel dispositif de filtration d'air.

Dans l'installation de circulation d'air, le dispositif de filtration d'air est monté dans un logement de réception d'un conduit d'air délimité par des parois, canalisant le flux d'air destiné à être distribué dans l'habitacle du véhicule automobile, le cadre du dispositif de filtration d'air coopérant avec les parois du conduit d'air.

Toutefois, afin d'assurer une bonne filtration du flux d'air par le dispositif de filtration d'air, il est essentiel d'agencer le dispositif de filtration d'air selon une direction particulière de montage dans le logement de réception de l'installation de circulation d'air. En effet, la conception du dispositif de filtration d'air est réalisée de façon à limiter le phénomène de colmatage et à assurer une certaine rigidité.

Or, lors de la première insertion du dispositif de filtration d'air dans l'installation de circulation d'air sur les chaînes de montage et/ou lors du remplacement du dispositif de filtration d'air en cours d'opérations de maintenance par un opérateur ou un utilisateur du véhicule, les indications propres au montage du dispositif de filtration d'air dans l'installation de circulation d'air ne sont pas toujours respectées. Il ressort alors que les performances du dispositif de filtration d'air ne sont pas optimales. De plus, la qualité du flux d'air destiné à être distribué dans l'habitacle du véhicule automobile peut être dégradée pouvant générer un sentiment d'insatisfaction et d'inconfort pour l'utilisateur du véhicule automobile.

De plus, un montage selon une mauvaise direction peut engendrer une dégradation de la capacité de colmatage du dispositif de filtration d'air et/ou générer une déformation des plis du média filtrant entraînant une perte de la capacité de filtration et une diminution de la durée de vie du dispositif de filtration d'air.

La présente invention a pour objet de proposer un dispositif de filtration d'air permettant de respecter, de façon certaine, les indications propres au montage et, ainsi, de permettre une mise en place selon la direction appropriée du dispositif de filtration d'air dans l'installation de circulation d'air.

Plus particulièrement, la présente invention concerne un dispositif de filtration d'air comprenant un média filtrant maintenu dans un cadre ayant au moins une paroi disposant d'un bord supérieur et d'un bord inférieur dans lequel au moins une découpe est agencée sur la paroi du cadre.

Selon divers modes de réalisation, la découpe est agencée sur le bord supérieur et/ou le bord inférieur de la paroi du cadre.

La découpe est une excroissance positive s'étendant depuis le bord supérieur à l'opposé du bord inférieur ou une encoche localisée s'étendant depuis le bord supérieur vers le bord inférieur.

Alternativement ou en complément, la découpe est une excroissance positive s'étendant depuis le bord inférieur à l'opposé du bord supérieur ou une encoche localisée s'étendant depuis le bord inférieur vers le bord supérieur.

La présente invention concerne une installation de circulation d'air disposant d'un boîtier comprenant un logement permettant la réception d'un dispositif de filtration d'air selon la revendication 1.

Des caractéristiques et avantages de l'invention apparaîtront à l'examen de la description qui va suivre en regard des dessins annexés, donnés à titre d'exemples non limitatifs, qui pourront servir à compléter la compréhension de la présente invention et l'exposé de sa réalisation, mais aussi, le cas échéant, contribuer à sa définition sur lesquels:
- les figures 1 et 2 sont des vues en perspective, de face, d'une installation de circulation d'air,
- les figures 3a et 3b sont des vues en perspective, arrière, d'une première variante de réalisation d'une installation de circulation d'air,
- les figures 4a et 4b sont des vues en perspective, de face, d'une deuxième variante de réalisation d'une installation de circulation d'air,
- les figures 5a et 5b sont respectivement des vues en perspective et de coté d'un dispositif de filtration d'air selon la première variante de réalisation, la figure 5a montre en particulier une variante de réalisation selon l'invention, et
- les figures 6a et 6b sont respectivement des vues en perspective et de coté d'un dispositif de filtration d'air selon la deuxième variante de réalisation.

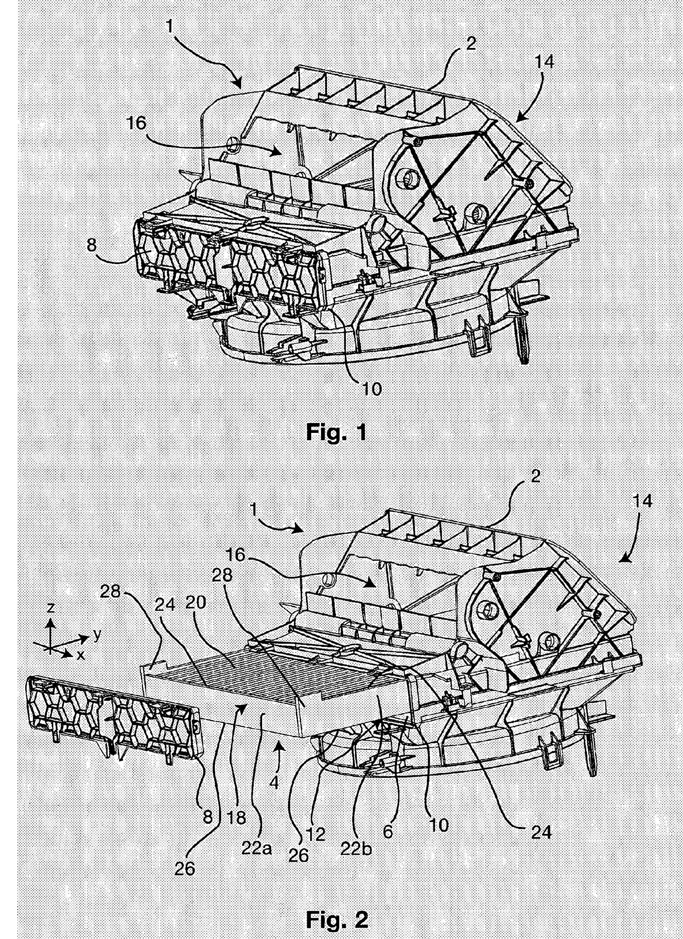

Les figures 1 et 2 sont des vues en perspective, de face, d'une installation de circulation d'air 1.

En particulier, l'installation de circulation d'air 1 comporte un boîtier 2 dans lequel est agencé un dispositif de filtration d'air 4. Le dispositif de filtration d'air 4 est un filtre à particules, notamment en fibres non tissées, ou un filtre à charbon actif ou un filtre combiné incluant les fonctions propres aux filtres à particules et aux filtres à charbon actif.

Le dispositif de filtration d'air 4 est maintenu dans le boîtier 2 de l'installation de circulation d'air 1 dans un logement 6, configuré notamment par l'intermédiaire de parois du boîtier 2. Avantageusement, l'une des parois du boîtier 2, dite paroi frontale 10, comprend une ouverture 12 permettant l'accès au dispositif de filtration d'air 4 depuis l'extérieur du boîtier 2 de l'installation de circulation d'air 1. L'ouverture 12 permet, notamment, l'insertion et l'extraction du dispositif de filtration d'air 4 lors des interventions de maintenance ou lors de l'introduction du dispositif de filtration d'air 4 dans le boîtier 2 de l'installation de circulation d'air 1 lors du montage initial sur chaînes de production.

Afin d'assurer le maintien du dispositif de filtration d'air 4 dans le logement 6 du boîtier 2 de l'installation de circulation d'air 1, une trappe 8 est montée, préférentiellement de façon étanche, sur le boîtier 2. Notamment, la trappe 8 est fixée sur la paroi frontale 10, en particulier par clippage ou par vissage, afin de fermer l'ouverture 12.

Selon l'exemple présenté sur les diverses figures, le boîtier 2 est un boîtier d'entrée d'air. Selon cet agencement, le boîtier 2 comprend une entrée d'air extérieur 14 et une entrée d'air intérieur 16, respectivement, destinées à permettre l'introduction d'un flux d'air provenant de l'extérieur d'un habitacle d'un véhicule et/ou un flux d'air provenant de l'intérieur de l'habitacle dans l'installation de circulation d'air 1 afin d'y être traité thermiquement préalablement à sa distribution dans l'habitacle du véhicule.

Afin de permettre la sélection entre le flux d'air provenant de l'extérieur de l'habitacle et le flux d'air provenant de l'intérieur de l'habitacle, un volet, non représenté sur les figures, est agencé dans maintenu dans le boîtier 2 de l'installation de circulation d'air 1.

Le dispositif de filtration d'air 4 est constitué d'un cadre 18 globalement de section polygonale et un média filtrant 20. De façon avantageuse, le média filtrant 20 est plissé et est maintenu dans le cadre 18.

Le cadre 18 est composé de plusieurs parois 22 reliées entre elles. Selon l'exemple de réalisation présenté sur les différentes figures, le cadre 18 est sensiblement rectangulaire et est constitué de deux parois longitudinales 22a, s'étendant une première direction, dite direction longitudinale x, et de deux parois transversales 22b, s'étendant selon une deuxième direction, dite direction transversale y. Avantageusement, la direction longitudinale x et la direction transversale y sont perpendiculaires. Enfin, les parois 22 ont une hauteur s'étendant selon une troisième direction, dite direction axiale z. La direction axiale z est avantageusement disposée perpendiculairement à la direction longitudinale x et à la direction transversale y pour former un repère orthonormé.

Ainsi, le cadre 18 comporte des dimensions géométriques correspondant à une largeur 'p' selon la direction longitudinale x, une longueur 'l' selon la direction transversale y et une hauteur 'h' selon la direction axiale z.

Néanmoins, il est également envisageable, dans le cadre de la présente invention, que le cadre 18 comporte un nombre de parois 22 supérieur ou inférieur à quatre. De même, le cadre 18 peut comporter une pluralité de parois 22 pouvant formées un angle entre elles distincts et/ou différent de 90°.

Chaque paroi 22 du cadre 18 comprend un bord supérieur 24 et un bord inférieur 26, le bord supérieur 24 étant agencé au dessus du bord inférieur 26 selon la direction axiale z.

Selon l'exemple de réalisation de la figure 2, le cadre 18 comporte au moins une découpe 28 agencée sur le bord supérieur 24 de la paroi transversale 22b. Préférentiellement, le cadre 18 comporte deux découpes 28 agencées respectivement sur les deux parois transversale 22b du cadre 18 du dispositif de filtration d'air 4.

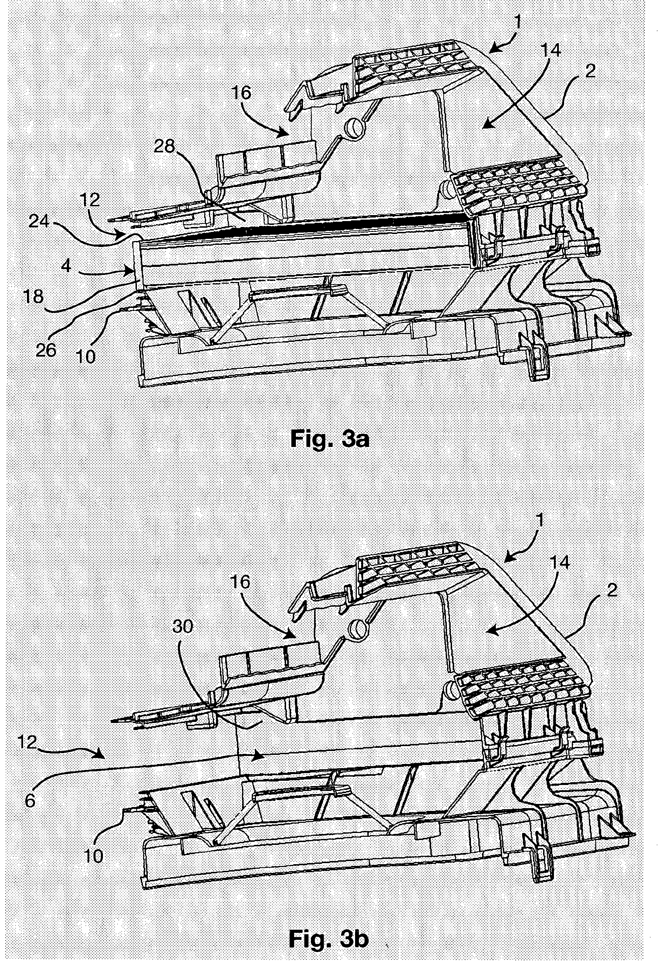

On se reporte aux figures 3a et 3b présentant une première variante de réalisation du dispositif de filtration d'air 4, selon une vue en perspective, arrière, dans lesquelles, respectivement, le dispositif de filtration d'air 4 est présent et a été ôté.

Comme cela est représenté sur les figures 3a et 3b, la découpe 28 coopère avec une déformation localisée 30 du logement 6 de l'installation de circulation d'air 1. Selon la première variante de réalisation du dispositif de filtration d'air 4, la déformation localisée 30 est configurée dans une des parois du boîtier 2 définissant le logement 6 du dispositif de filtration d'air 4.

Lors du montage du dispositif de filtration d'air 4 dans le boîtier 2 de l'installation de circulation d'air 1, le dispositif de filtration d'air 4 est inséré dans l'ouverture 12 de la paroi frontale 10 du boîtier 2. Par suite, le dispositif de filtration d'air 4 est coulissé dans le logement 6 de l'installation de circulation d'air 1, jusqu'à sa position finale de montage.

Dans cette configuration finale de montage, si le dispositif de filtration d'air 4 est monté dans selon la direction appropriée de mise en place, la découpe 28 est engagée dans la déformation localisée 30, préférentiellement par complémentarité de forme, du logement 6 de l'installation de circulation d'air 1 de telle sorte que le dispositif de filtration d'air 4 est entièrement logé dans le logement 6 de l'installation de circulation d'air 1 permettant le montage de la trappe 8 sur le boîtier 2.

Ainsi, dans l'hypothèse où le dispositif de filtration d'air 4 n'est pas monté selon la direction appropriée de mise en place, la découpe 28 ne se trouve pas face à la déformation localisée 30 et ne peut donc pas s'engager entièrement dans le logement 6 de l'installation de circulation d'air 1. Ainsi, une partie du dispositif de filtration d'air 4 reste à l'extérieur du logement 6 de l'installation de circulation d'air 1 de sorte que le montage de la trappe 8 sur le boîtier 2 est impossible. Une telle disposition indique un montage inapproprié du dispositif de filtration d'air 4.

Selon la première variante de réalisation du dispositif de filtration d'air 4, la découpe 28 constitue une excroissance positive, c'est-à-dire qu'elle s'étend depuis le bord supérieur 24 de la paroi longitudinale 22a du cadre 18 à l'opposé du bord inférieur 26 selon la direction axiale z.

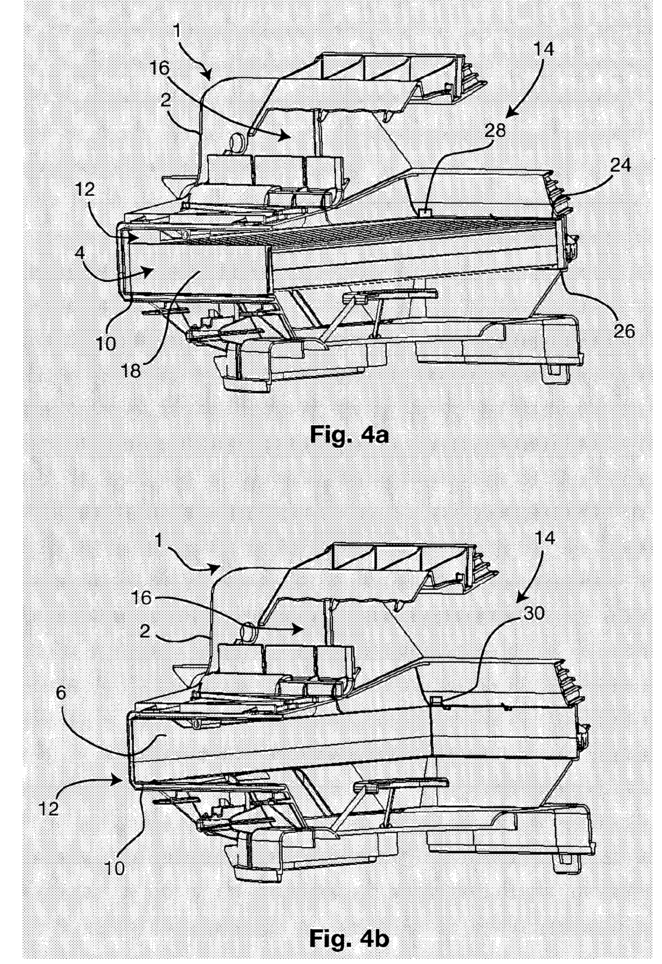

Les figures 4a et 4b présentent une deuxième variante de réalisation du dispositif de filtration d'air 4, selon une vue en perspective, de face, dans lesquelles, respectivement, le dispositif de filtration d'air 4 est présent et a été ôté.

La deuxième variante de réalisation se distingue de la première variante de réalisation du dispositif de filtration d'air 4 selon la présente invention par le fait que la découpe 28 est agencée sur le bord supérieur 24 de la paroi longitudinale 22a du cadre 18.

Ainsi, selon la première variante de réalisation du dispositif de filtration d'air 4, la déformation localisée 30 est disposée sur une paroi latérale du logement 6 de l'installation de circulation d'air 1 alors que, pour la deuxième variante de réalisation du dispositif de filtration d'air 4, la déformation localisée 30 est disposée sur une paroi de fond et/ou la paroi frontale 10 du boîtier 2 de l'installation de circulation d'air 1.

De façon préférentielle, selon la première variante de réalisation du dispositif de filtration d'air 4, le logement 6 comporte deux déformations localisées 30 disposées respectivement sur deux parois latérales agencées de part et d'autre de l'ouverture 12 de la paroi frontale 10 du boîtier 2.

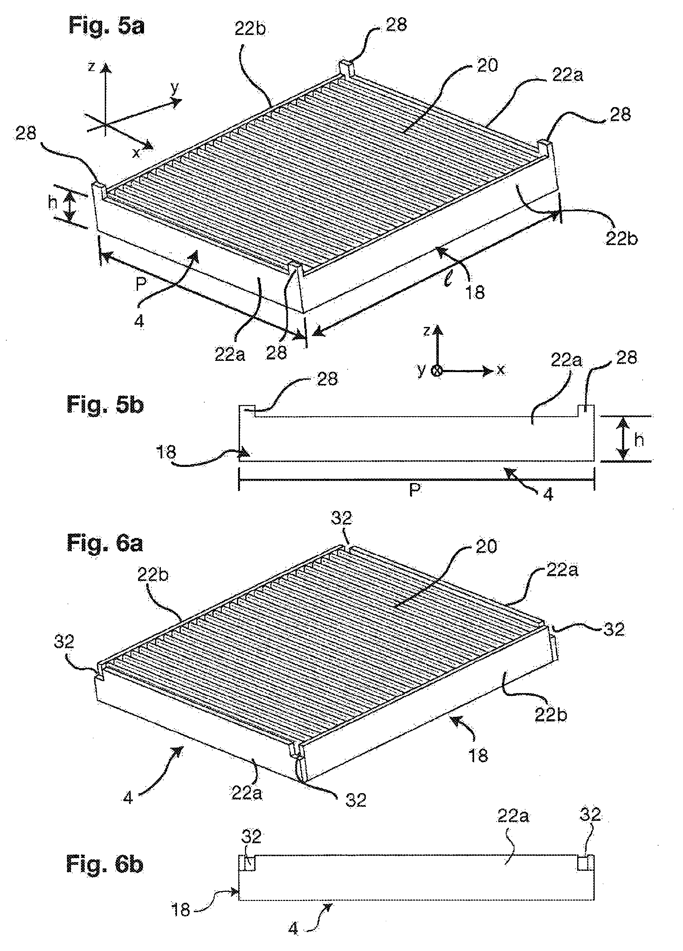

Les figures 5a et 5b présentent une première configuration du dispositif de filtration d'air 4 selon la deuxième variante de réalisation, la figure 5a en particulier selon de la présente invention, respectivement selon des vues en perspective et de coté.

Selon cette configuration, le cadre 18 comporte quatre découpes 28 disposées sur les parois transversales 22b du cadre 18 propre à coopérer avec au moins autant de déformations localisées 30. Le nombre de découpes 28 n'est pas limitatif.

Selon l'invention, la découpe 28 est localisée au niveau de l'intersection entre la paroi longitudinale 22a et la paroi transversale 22b.

L'exemple de réalisation des figures 5a et 5b est tel que le dispositif de filtration d'air 4 est sensiblement symétrique par rapport au plan médian dispositif de filtration d'air 4. Néanmoins, selon un autre mode de réalisation, le cadre 18 comporte au moins une découpe 28 agencé de façon asymétrique, par rapport au plan médian dispositif de filtration d'air 4, sur les parois 22 du cadre 18.

Ainsi, la découpe 28 est apte à constituer un premier moyen de détrompage. De plus, la disposition asymétrique de la découpe 28 permet de définir un second moyen de détrompage.

Les divers exemples présentés sur les figures précédentes comportent au moins une découpe 28 réalisée sous la forme d'une excroissance positive. Toutefois, la présente invention couvre également les modes de réalisation incorporant au moins une découpe 28 réalisée sous la forme d'une encoche localisée.

De plus, les découpes 28 réalisées sous la forme d'excroissances positives présentent également une configuration avantageuse pour permettre l'extraction du dispositif de filtration d'air 4. En effet, les excroissances positives peuvent être saisies par l'opérateur ou l'utilisateur du véhicule et ainsi faciliter l'opération d'extraction. Avantageusement, les découpes 28 peuvent présenter une partie flexible permettant de les fléchir et ainsi faciliter leur préhension.

Les figures 6a et 6b présentent une deuxième configuration du dispositif de filtration d'air 4 comportant une encoche localisée 32.

Selon la deuxième configuration du dispositif de filtration d'air 4, l'encoche localisée 32 s'étend depuis le bord supérieur 24 de la paroi transversale 22b du cadre 18 vers le bord inférieur 26 selon la direction axiale z.

Indifféremment, l'encoche localisée 32 peut être réalisée sur la paroi longitudinale 22a et/ou la paroi transversale 22b.

Selon cette deuxième configuration du dispositif de filtration d'air 4, la déformation localisée 30 du logement 6 de l'installation de circulation d'air 1 est constituée par un plot de détrompage venant coopérer avec l'encoche localisée 32 en configuration finale de montage, préférentiellement par complémentarité de forme.

Le plot de détrompage peut être disposé sur la paroi de fond du boîtier 2 du boîtier 2 de l'installation de circulation d'air 1 et/ou sur la trappe 8.

Selon la présente invention, les déformations localisées ou les plots de détrompage sont disposés sur les parois du boîtier ou la trappe de fermeture.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de réalisation décrits précédemment.

## Revendications

1. Installation de circulation d'air (1) disposant d'un boîtier (2) comprenant un logement (6) permettant la réception d'un dispositif de filtration d'air (4), ledit dispositif de filtration d'air comprenant un média filtrant (20) maintenu dans un cadre (18) comportant au moins une paroi (22, 22a, 22b) longitudinale (22a) et au moins une paroi transversale (22b) ayant chacune un bord supérieur (24) et un bord inférieur (26) **caractérisé en ce qu'**au moins une découpe (28) est agencée sur la paroi (22, 22a, 22b) du cadre 18 localisée au niveau de l'intersection entre la paroi longitudinale (22a) et la paroi transversale (22b) et **en ce que** le logement (6) comporte une déformation localisée (30) apte à coopérer avec la découpe (28) dans une configuration finale de montage du dispositif de filtration d'air (4) dans le logement (6).

2. Installation de circulation d'air selon la revendication 1, **caractérisé en ce que** la découpe (28) est agencée sur le bord supérieur (24) de la paroi (22a, 22b) du cadre (18).

3. Installation de circulation d'air selon la revendication 1 ou 2, **caractérisé en ce que** la découpe (28) est agencée sur le bord inférieur (26) de la paroi (22a, 22b).

4. Installation de circulation d'air selon la revendication 2, **caractérisé en ce que** la découpe (28) est une excroissance positive s'étendant depuis le bord supérieur (24) à l'opposé du bord inférieur (26).

5. Installation de circulation d'air selon la revendication 2, **caractérisé en ce que** la découpe (28) est une encoche localisée (32) s'étendant depuis le bord supérieur (24) vers le bord inférieur (26).

6. Installation de circulation d'air selon la revendication 3, **caractérisé en ce que** la découpe (28) est une excroissance positive s'étendant depuis le bord inférieur (26) à l'opposé du bord supérieur (24).

7. Installation de circulation d'air selon la revendication 3, **caractérisé en ce que** la découpe (28) est une encoche localisée (32) s'étendant depuis le bord inférieur (26) vers le bord supérieur (24).

8. Installation de circulation d'air (1) selon l'une quelconque des revendications 1 à 7, **caractérisé en ce que** la déformation localisée (30) du logement (6) est agencée sur une paroi latérale dudit logement (6).

9. Installation de circulation d'air (1) selon l'une quelconque des revendications 1 à 8 **caractérisé en ce que** la déformation localisée (30) du logement (6) est agencée sur une paroi frontale (10) dudit logement (6).

10. Installation de circulation d'air (1) selon l'une quelconque des revendications 1 à 9, **caractérisé en ce que** la déformation localisée (30) du logement (6) est agencée sur une paroi de fond dudit logement (6).

11. Installation de circulation d'air (1) selon l'une quelconque des revendications 1 à 10, **caractérisé en ce que** la déformation localisée (30) du logement (6) est agencée sur une trappe (8) apte à fermer une ouverture (12) du boîtier (2).

## Patentansprüche

1. Luftzirkulationsanlage (1) mit einem Gehäuse (2), das eine Aufnahme (6) zum Aufnehmen einer Luftfiltervorrichtung (4) umfasst, wobei die Luftfiltervorrichtung ein in einer Einfassung (18), die mindestens eine Wand (22, 22a, 22b), die in Längsrichtung (22a) verläuft, und mindestens eine Querwand (22b), jeweils mit einem oberen Rand (24) und einem unteren Rand (26), aufweist, gehaltenes Filtermedium (20) umfasst, **dadurch gekennzeichnet, dass** mindestens ein Ausschnitt (28) an der Wand (22, 22a, 22b) der Einfassung (18) angeordnet und am Schnittpunkt zwischen der Längswand (22a) und der Querwand (22b) positioniert ist, und dass die Aufnahme (6) eine speziell positionierte Verformung (30) aufweist, die mit dem Ausschnitt (28) in einer Endkonfiguration, in der die Luftfiltervorrichtung (4) in der Aufnahme (6) angebracht ist, zusammenwirkt.

2. Luftzirkulationsanlage nach Anspruch 1, **dadurch gekennzeichnet, dass** der Ausschnitt (28) am oberen Rand (24) der Wand (22a, 22b) der Einfassung (18) angeordnet ist.

3. Luftzirkulationsanlage nach Anspruch 1 oder 2, **dadurch gekennzeichnet, dass** der Ausschnitt (28) am unteren Rand (26) der Wand (22a, 22b) angeordnet ist.

4. Luftzirkulationsanlage nach Anspruch 2, **dadurch gekennzeichnet, dass** der Ausschnitt (28) eine positiv geformte Ausstülpung ist, die sich vom oberen Rand (24) gegenüber dem unteren Rand (26) erstreckt.

5. Luftzirkulationsanlage nach Anspruch 2, **dadurch gekennzeichnet, dass** der Ausschnitt (28) eine speziell positionierte Kerbe (32) ist, die sich vom oberen Rand (24) zum unteren Rand (26) erstreckt.

6. Luftzirkulationsanlage nach Anspruch 3, **dadurch gekennzeichnet, dass** der Ausschnitt (28) eine positiv geformte Ausstülpung ist, der sich vom unteren Rand (26) gegenüber dem oberen Rand (24) erstreckt.

7. Luftzirkulationsanlage nach Anspruch 3, **dadurch gekennzeichnet, dass** der Ausschnitt (28) eine speziell positionierte Kerbe (32) ist, die sich vom unteren Rand (26) zum oberen Rand (24) erstreckt.

8. Luftzirkulationsanlage (1) nach einem der Ansprüche 1 bis 7, **dadurch gekennzeichnet, dass** die speziell positionierte Verformung (30) der Aufnahme (6) an einer lateralen Wand der Aufnahme (6) angeordnet ist.

9. Luftzirkulationsanlage (1) nach einem der Ansprüche 1 bis 8, **dadurch gekennzeichnet, dass** die speziell positionierte Verformung (30) der Aufnahme (6) an einer Vorderwand (10) der Aufnahme (6) angeordnet ist.

10. Luftzirkulationsanlage (1) nach einem der Ansprüche 1 bis 9, **dadurch gekennzeichnet, dass** die speziell positionierte Verformung (30) der Aufnahme (6) an einer Rückwand der Aufnahme (6) angeordnet ist.

11. Luftzirkulationsanlage (1) nach einem der Ansprüche 1 bis 10, **dadurch gekennzeichnet, dass** die speziell positionierte Verformung (30) der Aufnahme (6) an einer Haube (8) angeordnet ist, die eine Öffnung (12) des Gehäuses (2) verschließen kann.

## Claims

1. Air circulation installation (1) having a casing (2) comprising a housing (6) to accommodate an air filtration device (4), the said air filtration device comprising a filter medium (20) held in a surround (18) comprising at least one wall (22, 22a, 22b) that is longitudinal (22a) and at least one transverse wall (22b), each wall having an upper edge (24) and a lower edge (26), **characterized in that** there is at least one cutout feature (28) in the wall (22, 22a, 22b) of the surround (18) that is localized at the intersection between the longitudinal wall (22a) and the transverse wall (22b) and **in that** the housing (6) has a localized deformation (30) able to collaborate with the cutout feature (28) in a final configuration in which the air filtration device (4) is mounted in the housing (6).

2. Air circulation installation according to Claim 1, **characterized in that** the cutout feature (28) is arranged on the upper edge (24) of the wall (22a, 22b) of the surround (18).

3. Air circulation installation according to Claim 1 or 2, **characterized in that** the cutout feature (28) is arranged on the lower edge (26) of the wall (22a, 22b).

4. Air circulation installation according to Claim 2, **characterized in that** the cutout feature (28) is a positive projection extending from the upper edge (24) in the opposite direction from the lower edge (26).

5. Air circulation installation according to Claim 2, **characterized in that** the cutout feature (28) is a localized notch (32) extending from the upper edge (24) towards the lower edge (26).

6. Air circulation installation according to Claim 3, **characterized in that** the cutout feature (28) is a positive projection extending from the lower edge (26) in the opposite direction from the upper edge (24).

7. Air circulation installation according to Claim 3, **characterized in that** the cutout feature (28) is a localized notch (32) extending from the lower edge (26) towards the upper edge (24).

8. Air circulation installation (1) according to any one of Claims 1 to 7, **characterized in that** the localized deformation (30) of the housing (6) is arranged on a lateral wall of the said housing (6).

9. Air circulation installation (1) according to any one of Claims 1 to 8, **characterized in that** the localized deformation (30) of the housing (6) is arranged on a frontal wall (10) of the said housing (6).

10. Air circulation installation (1) according to any one of Claims 1 to 9, **characterized in that** the localized deformation (30) of the housing (6) is arranged on an end wall of the said housing (6).

11. Air circulation installation (1) according to any one of Claims 1 to 10, **characterized in that** the localized deformation (30) of the housing (6) is arranged on a hatch (8) able to close an opening (12) of the casing (2).
